# EUROPÄISCHE PATENTSCHRIFT

(11) **EP 3 078 940 B1**
(45) Veröffentlichungstag und Bekanntmachung des Hinweises auf die Patenterteilung: **15.02.2017**
(21) Anmeldenummer: 15162724.7
(22) Anmeldetag: 08.04.2015
(51) Int. Cl.: G01D 5/347

(54) **LÄNGENMESSEINRICHTUNG**
LENGTH MEASURING DEVICE
DISPOSITIF DE MESURE DE LONGUEUR

(43) Veröffentlichungstag der Anmeldung: 12.10.2016
(73) Patentinhaber: Dr. Johannes Heidenhain GmbH, 83301 Traunreut (DE)
(72) Erfinder: Nutzinger, Tarek, 83377 Vachendorf (DE); Gschossmann, Horst, 84577 Tüßling (DE)

(56) Entgegenhaltungen:
- EP-A2- 0 114 972
- EP-A2- 0 566 828
- EP-A2- 0 884 563
- DE-A1- 2 643 304
- DE-A1-102005 027 025

## Beschreibung

### GEBIET DER TECHNIK

Die vorliegende Erfindung betrifft eine Längenmesseinrichtung nach dem Oberbegriff des Anspruchs 1.

### STAND DER TECHNIK

Derartige Längenmesseinrichtungen werden in Bearbeitungsmaschinen zur Messung der Relativlage eines Werkzeugs bezüglich eines zu bearbeitenden Werkstücks, in Koordinatenmessmaschinen zur Ermittlung von Lage und Abmessungen von Prüfobjekten sowie auch in der Halbleiterindustrie eingesetzt. Dabei wird der Maßstab in der Regel vom Hersteller der Längenmesseinrichtung zur besseren Handhabbarkeit an einem Träger befestigt und dieser Träger dann vom Anwender an einem zu messenden ersten Objekt angebaut. Stationär gegenüber dem bewegten Maßstab ist eine Abtasteinheit der Längenmesseinrichtung an einem zweiten Objekt angeordnet, dessen Relativposition gegenüber dem zu messenden ersten Objekt gemessen werden soll.

Die EP 0 114 972 A2, EP 0 884 563 A2, EP 0 566 828 A2, DE 10 2005 027 025 A1 zeigen diverse Möglichkeiten zur Befestigung eines Maßstabs an einem Träger sowie die Befestigung des Trägers an einem zu messenden Objekt.

Gemäß der EP 0 114 972 A2 ist der Maßstab an einem Träger mittels einer Klebeschicht befestigt, so dass sich in seiner Mitte ein Fixpunkt gegenüber dem Träger ausbildet. Ein Montageelement zur Befestigung des Trägers an einem zu messenden Objekt ist mittels eines Passstiftes am Träger befestigt.

Zur Bildung eines Fixpunktes des Maßstabs gegenüber dem Träger ist es bekannt, diesen an einer Stelle am Träger in Messrichtung ortsfest zu fixieren.

Gemäß der DE 26 43 304 A1 erfolgt die ortsfeste Fixierung des Maßstabs am Fixpunkt mittels eines unelastischen Klebemittels. Außerhalb des Fixpunktes ist der Maßstab vom Träger entkoppelt, indem ein elastisches Klebemittel zwischen Träger und Maßstab angeordnet ist. Dadurch können sich Maßstab und Träger bei Temperaturänderungen relativ zueinander verlagern, ohne dass Zwangskräfte ausgeübt werden.

### ZUSAMMENFASSUNG DER ERFINDUNG

Der vorliegenden Erfindung liegt die Aufgabe zugrunde, eine Längenmesseinrichtung anzugeben, die kompakt aufgebaut ist und mit der eine genaue Positionsmessung ermöglicht ist.

Diese Aufgabe wird erfindungsgemäß durch eine Längenmesseinrichtung mit den Merkmalen des Anspruchs 1 gelöst.

Vorteilhafte Ausführungen der erfindungsgemäßen Längenmesseinrichtung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung eines Ausführungsbeispiels in Verbindung mit den Figuren erläutert.

### KURZE BESCHREIBUNG DER ZEICHNUNGEN

### Es zeigt

- Figur 1: eine schematische Darstellung einer erfindungsgemäßen Längenmesseinrichtung;
- Figur 2: einen Querschnitt der Längenmesseinrichtung gemäß Figur 1;
- Figur 3: einen Längsschnitt der Längenmesseinrichtung gemäß Figur 1 und.
- Figur 4: einen vergrößert dargestellten Ausschnitt A aus der Figur 3.

### BESCHREIBUNG DER AUSFÜHRUNGSFORMEN

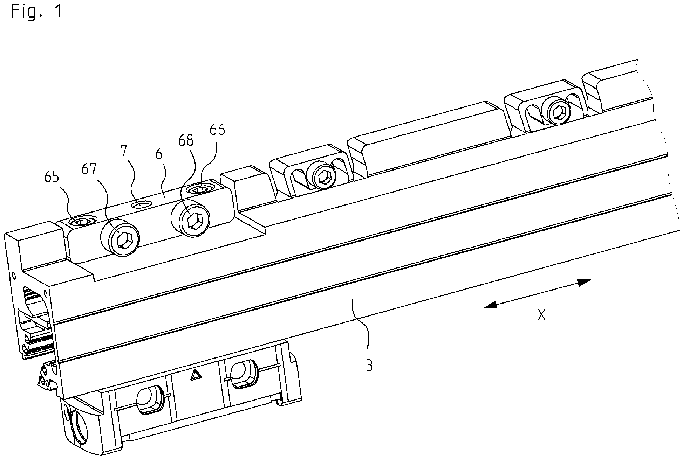

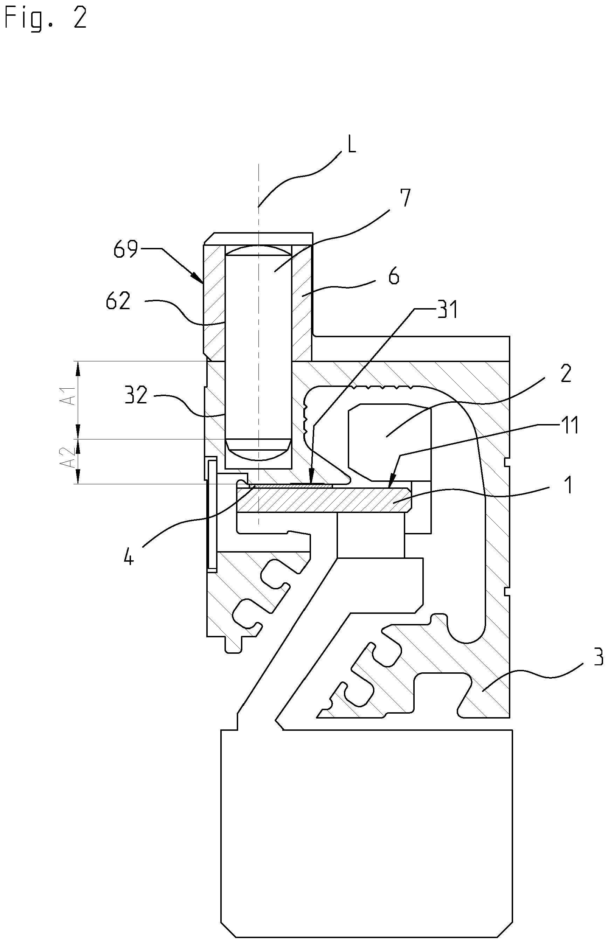

Ein Ausführungsbeispiel der Erfindung wird nachfolgend anhand der Figuren 1 bis 4 erläutert. Diese erfindungsgemäß ausgestaltete Längenmesseinrichtung umfasst einen Maßstab 1, der sich in einer Längsrichtung X erstreckt und der eine Messteilung 11 aufweist. Die Messteilung 11 ist als lichtelektrisch abtastbare Inkrementalteilung zur hochgenauen Positionsmessung in Längsrichtung X ausgebildet. Alternativ kann die Messteilung auch eine Absolutcodierung sein. Zur Positionsmessung wird die Messteilung 11 des Maßstabs 1 von einer Abtasteinheit 2 abgetastet, die in Figur 2 nur schematisch dargestellt ist.

Der Maßstab 1 und die Abtasteinheit 2 sind geschützt im Innenraum eines Hohlprofils angeordnet. Das Hohlprofil bildet den Träger 3 für den Maßstab 1. Dieser Träger 3 besteht aus einem Material, das einen vom Maßstab 1 abweichenden thermischen Längenausdehnungskoeffizienten besitzt. Der Maßstab 1 besteht beispielsweise aus einem Glas- oder Glaskeramik-Material (z.B. ZERODUR) und der Träger 3 aus einem Metall, insbesondere aus Aluminium.

Der Maßstab 1 besteht vorzugsweise aus einem Material mit vernachlässigbar kleinem thermischen Längenausdehnungskoeffizienten, insbesondere mit einem thermischen Längenausdehnungskoeffizient α im Temperaturbereich von 0° bis 50° kleiner als 1,5 x 10⁻⁶K⁻¹, insbesondere aber kleiner als 0,1 x 10⁻⁶K⁻¹. Dadurch ist der durch Abtastung der Messteilung 11 gewonnene Positionswert unabhängig von Temperaturschwankungen.

Damit sich der Maßstab 1 und der Träger 3 bei Temperaturänderungen relativ zueinander verlagern können, ohne dass Zwangskräfte und somit Messfehler auftreten, ist der Maßstab 1 an einer Fixposition F - auch Fixpunkt genannt - starr am Träger 3 befestigt und im übrigen Bereich vom Träger 3 derart mechanisch entkoppelt, dass sich der Träger 3 ausgehend von diesem Fixpunkt F gegenüber dem Maßstab 1 frei ausdehnen kann. Die starre Befestigung des Maßstabs 1 am Fixpunkt F erfolgt durch ein unelastisches Klebemittel 4, das zwischen einer Oberfläche des Maßstabs 1 und einer Montagefläche 31 des Trägers 3 vorgesehen ist. Im übrigen Bereich - in Messrichtung X beidseitig des Fixpunktes F betrachtet - ist die Entkopplung des Maßstabs 1 vom Träger 3 realisiert, indem zwischen der Montagefläche 31 (Auflagefläche) und dem Maßstab 1 ein Haftmittel 5 hoher Elastizität angeordnet ist. Dieses Haftmittel 5 ist beispielsweise ein elastischer Klebstoff, ein doppelseitiges Klebeband oder ein viskoser oder viskoelastischer Flüssigkeitsfilm, z.B. Ölfilm. Die Entkopplung kann aber auch durch eine Kugellagerung oder eine Luftlagerung realisiert sein.

Bei dem dargestellten Ausführungsbeispiel ist der Maßstab 1 außerhalb des Fixpunktes F mittels eines Haftmittels 5 in Form eines doppelseitigen Klebebandes an der Montagefläche 31 am Träger 3 gehalten.

Zur Bildung des Fixpunktes F ist der Maßstab 1 einerseits in Messrichtung X ortsfest am Träger 3 fixiert. Diese ortsfeste Fixierung des Maßstabs 1 am Träger 3 erfolgt durch das Klebemittel 4, das in einem Spalt zwischen Montagefläche 31 und Maßstab 1 flächig eingebracht ist. Ist das Haftmittel 5 ein doppelseitiges Klebeband, dann ist die Dicke des Klebespaltes für das unelastische Klebemittel 4 durch die Dicke des Klebebandes vorgegeben.

Zur Ausbildung einer definierten Klebefläche auf der Montagefläche 31 des Trägers 3 in Messrichtung X sind in der Montagefläche 31 zwei in Messrichtung X voneinander beabstandete Ausnehmungen 33, 34 bzw. Nuten im Träger 3 vorgesehen, welche als Fließstopp für das Klebemittel 4 wirken und den Klebebereich in Messrichtung X zu beiden Seiten begrenzen.

Das Klebemittel 4 ist vorzugsweise ein lichthärtender Klebstoff, insbesondere ein UV-aushärtender Klebstoff (unter ultraviolettem Lichteinwirkung aushärtender Klebstoff). Dies hat den Vorteil, dass bei der Bildung des Fixpunktes keine übermäßige Hitze auf den Maßstab 1 und den Träger 3 einwirkt und somit die Messgenauigkeit der Längenmesseinrichtung nicht nachhaltig negativ beeinflusst wird.

Um diesen Fixpunkt F andererseits auch zu einem zu messenden Objekt zu übertragen, ist ein Montageelement 6 vorgesehen, das dazu ausgelegt ist an dem zu messenden Objekt befestigt zu werden. Dieses Montageelement 6 ist mittels eines Passstiftes 7 mit dem Träger 3 verbunden, indem dieser einerseits in einer Passbohrung 62 des Montageelementes 6 und andererseits in einer Passbohrung 32 des Trägers 3 senkrecht zur Messrichtung X eingepresst ist und somit spielfrei darin verläuft.

Der Passstift 7 bildet im Träger 3 über eine erste Strecke A1 einen spielfreien Formschluss, wobei diese spielfrei ausgestaltete Passung möglichst weit an die Montagefläche 31 des Trägers 3, also an die starre Klebung, heranreicht. Die spielfreie Passung im Träger 3 reicht zumindest bis zu einer zweiten Strecke A2 an die Montagefläche 31 heran, die kleiner ist als die erste Strecke A1. Der Abstand A2 ist also kleiner als die Strecke A1. Dies gewährleistet eine optimale Übertragung des durch die Klebung erzeugten starren Stoffschlusses zu dem Montageelement 6.

Das Material des Montageelementes 6 ist an das Material des zu messenden Objektes angepasst, an welches das Montageelement 6 zur Positionsmessung angebaut wird. Vorzugsweise besteht das Montageelement 6 aus Eisen bzw. Stahl.

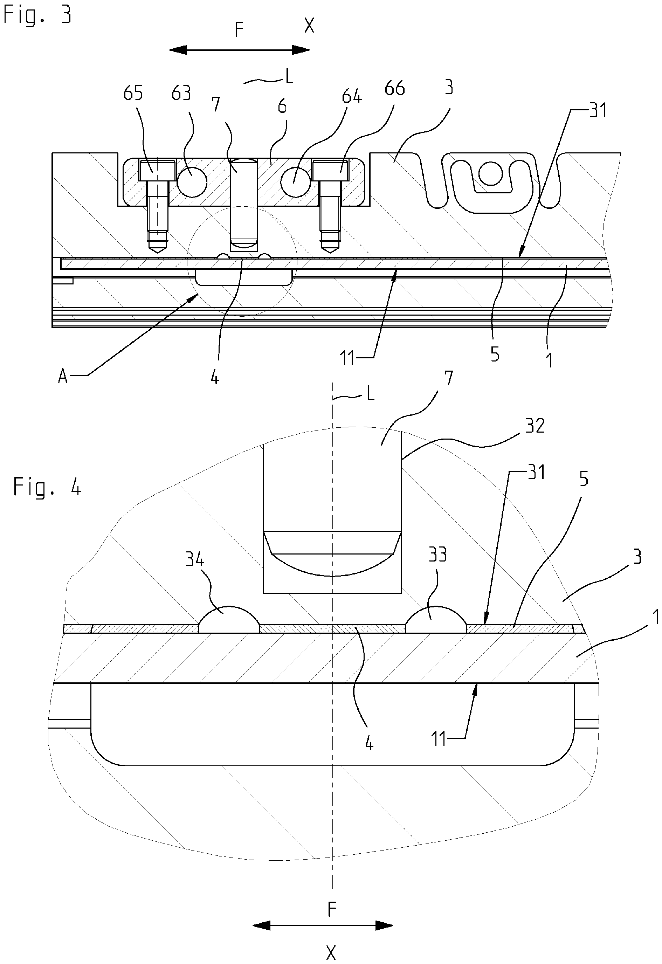

Die Längsachse L des Passstiftes 7 verläuft senkrecht zur Montagefläche 31 des Trägers 3 und schneidet die flächige Klebung. In Messrichtung X betrachtet verläuft die Längsachse L des Passstiftes 7 im Zentrum der flächigen Klebung. In Messrichtung X betrachtet verläuft die Längsachse L des Passstiftes 7 somit auch zentrisch zu den beiden Ausnehmungen 33, 34. Diese Ausgestaltung ist insbesondere in den Figuren 3 und 4 dargestellt.

Zusätzlich zum Passstift 7 kann das Montageelement 6 mittels Schrauben 65, 66 am Träger 3 befestigt sein, die das Montageelement 6 in Längsrichtung L des Passstiftes 7 am Träger 3 fixieren. Die in den Träger 3 eingeschraubten Schrauben 65, 66 bilden keine spielfreie Passung, so dass bei der Ausgestaltung des Passstiftes 7 als Zylinderstift das Montageelement 6 Anbautoleranzen ausgleichen kann, weil es sich um die Längsachse L des Passstiftes 7 gegenüber dem Träger 3 geringfügig verdrehen kann.

Beidseitig und symmetrisch zum Passstift 7 und jeweils in Messrichtung X vom Passstift 7 beabstandet, ist im Montageelement 6 jeweils eine Bohrung 63, 64 vorgesehen. Die beiden Bohrungen 63 und 64 sind dazu ausgelegt das Montageelement 6 mit dem zu messenden Objekt mittels Schrauben 67, 68 zu befestigen. Hierzu weist das Montageelement 6 eine ebene Montagefläche 69 auf, die parallel zur Messrichtung X und parallel zur Längsachse L des Passstiftes 7 verläuft. Die Bohrungen 63, 64 verlaufen jeweils senkrecht zur Messrichtung X und senkrecht zur Längsachse L des Passstiftes 7.

Der Passstift 7 reicht vorzugsweise im Montageelement 6 bis zu den beiden Bohrungen 63 und 64, vorzugsweise sogar darüber hinaus.

Die Bohrungen 63, 64 sind in der Figur 3 dargestellt und die Schrauben 67, 68 sind in Figur 1 dargestellt.

Die Erfindung ist nicht auf das lichtelektrische Abtastprinzip beschränkt. Die Messteilung kann insbesondere auch magnetisch oder induktiv abtastbar ausgebildet sein.

## Patentansprüche

1. Längenmesseinrichtung mit einem Maßstab (1), der sich in einer Längsrichtung (X) erstreckt und der eine Messteilung (11) zur Positionsmessung in Längsrichtung (X) aufweist, wobei der Maßstab (1) an einer Fixposition (F) in Messrichtung (X) mittels eines an einer Montagefläche (31) eines Trägers (3) aufgetragenen Klebemittels (4) starr fixiert ist und im übrigen Bereich vom Träger (3) entkoppelt ist, so dass sich der Maßstab (1) und der Träger (3) bei Temperaturänderungen relativ zueinander in Längsrichtung (X) verlagern können,
**dadurch gekennzeichnet dass**
ein Montageelement (6) vorgesehen ist, das dazu ausgelegt ist an einem zu messenden Objekt befestigt zu werden, wobei das Montageelement (6) an der Fixposition (F) mittels eines Passstiftes (7) mit dem Träger (3) spielfrei verbunden ist, indem dieser einerseits in eine Passbohrung (62) des Montageelementes (6) und andererseits in eine Passbohrung (32) des Trägers (3) senkrecht zur Messrichtung (X) eingepresst ist, und
wobei der Passstift (7) im Träger (3) über eine erste Strecke (A1) einen spielfreien Formschluss bildet, wobei dieser Formschluss an die Montagefläche (31) des Trägers (3) bis zu einer zweiten Strecke (A2) heranreicht, wobei die zweite Strecke (A2) kleiner ist als die erste Strecke (A1).

2. Längenmesseinrichtung nach Anspruch 1, wobei die Längsachse (L) des Passstiftes (7) senkrecht zur Montagefläche (31) des Trägers (3) verläuft.

3. Längenmesseinrichtung nach einem der vorhergehenden Ansprüche, wobei das Klebemittel (4) in Messrichtung (X) flächig auf der Montagefläche (31) aufgetragen ist und die Längsachse (L) des Passstiftes (7) das in Messrichtung (X) flächig aufgetragene Klebemittel (4) zentrisch schneidet.

4. Längenmesseinrichtung nach einem der vorhergehenden Ansprüche, wobei das Klebemittel (4) ein lichthärtender Klebstoff ist.

5. Längenmesseinrichtung nach einem der vorhergehenden Ansprüche, wobei beidseitig symmetrisch zu dem Passstift (7) und in Messrichtung (X) zueinander beabstandet jeweils eine senkrecht zur Messrichtung (X) und senkrecht zur Längsachse (L) des Passstiftes (7) verlaufende Bohrung (63, 64) im Montageelement (6) vorgesehen ist, wobei die beiden Bohrungen (63, 64) dazu ausgelegt sind das Montageelement (6) mit dem zu messenden Objekt mittels Schrauben (67, 68) zu befestigen.

6. Längenmesseinrichtung nach einem der vorhergehenden Ansprüche, wobei Maßstab (1) und Träger (3) aus Materialien mit unterschiedlichen thermischen Längenausdehnungskoeffizienten bestehen.

7. Längenmesseinrichtung nach Anspruch 6, wobei der Maßstab (1) aus Glas oder Glaskeramik besteht und der Träger (3) aus einem Metall besteht.

8. Längenmesseinrichtung nach einem der vorhergehenden Ansprüche, wobei der Maßstab (1) aus einem Material mit einem thermischen Längenausdehnungskoeffizient α im Temperaturbereich von 0° bis 50° kleiner als 1,5 x 10⁻⁶K⁻¹ besteht.

9. Längenmesseinrichtung nach einem der vorhergehenden Ansprüche, wobei der Träger (3) aus Aluminium besteht.

10. Längenmesseinrichtung nach einem der vorhergehenden Ansprüche, wobei der Maßstab (1) an Stellen außerhalb der Fixposition (F) mittels eines Haftmittels (5) hoher Elastizität am Träger (3) befestigt ist.

11. Längenmesseinrichtung nach Anspruch 10, wobei das Haftmittel (5) hoher Elastizität ein doppelseitiges Klebeband ist.

12. Längenmesseinrichtung nach einem der vorhergehenden Ansprüche, wobei das Montageelement (6) aus Stahl besteht.

13. Längenmesseinrichtung nach einem der vorhergehenden Ansprüche, wobei der Träger (3) ein Hohlprofil ist, in dessen Innenraum der Maßstab (1) und eine Abtasteinheit (8) zur Abtastung des Maßstabs (1) angeordnet sind, wobei der Passstift 7) in einer Passbohrung (32) des Hohlprofils angeordnet ist und zu dem außerhalb des Hohlprofils angeordneten Montageelement (6) verläuft.

## Claims

1. Length measuring device with a scale (1), which extends in a longitudinal direction (X) and has a measuring graduation (11) for position measurement in the longitudinal direction (X), wherein the scale (1) is rigidly fixed at a fixing position (F) in the measuring direction (X) by means of an adhesive agent (4) applied to a mounting surface (31) of a support (3) and in the remaining region is isolated from the support (3), so that when there are changes in temperature the scale (1) and the support (3) can move in relation to one another in the longitudinal direction (X),
**characterized in that**
a mounting element (6) is provided, designed to be fastened to an object to be measured, wherein the mounting element (6) is connected in a play-free manner to the support (3) at the fixing position (F) by means of a locating pin (7), **in that** this pin is on the one hand pressed into a locating hole (62) in the mounting element (6) and on the other hand is pressed into a locating hole (32) in the support (3) perpendicularly to the measuring direction (X), and
wherein the locating pin (7) in the support (3) forms a play-free form fit over a first distance (A1), this form fit reaching up to the mounting surface (31) of the support (3) to within a second distance (A2), the second distance (A2) being less than the first distance (A1).

2. Length measuring device according to Claim 1, wherein the longitudinal axis (L) of the locating pin (7) runs perpendicularly to the mounting surface (31) of the support (3).

3. Length measuring device according to one of the preceding claims, wherein the adhesive agent (4) is applied two-dimensionally in the measuring direction (X) on the mounting surface (31) and the longitudinal axis (L) of the locating pin (7) centrally intersects the adhesive agent (4) applied two-dimensionally in the measuring direction (X).

4. Length measuring device according to one of the preceding claims, wherein the adhesive agent (4) is a light-curing adhesive.

5. Length measuring device according to one of the preceding claims, wherein holes (63, 64) are respectively provided in the mounting element (6) on both sides symmetrically in relation to the locating pin (7) and spaced apart from one another in the measuring direction (X), in each case running perpendicularly to the measuring direction (X) and perpendicularly to the longitudinal axis (L) of the locating pin (7), wherein the two holes (63, 64) are designed in such a way as to fasten the mounting element (6) to the object to be measured by means of screws (67, 68).

6. Length measuring device according to one of the preceding claims, wherein the scale (1) and the carrier (3) consist of materials with different coefficients of thermal linear expansion.

7. Length measuring device according to Claim 6, wherein the scale (1) consists of glass or glass ceramic and the support (3) consists of a metal.

8. Length measuring device according to one of the preceding claims, wherein the scale (1) consists of a material with a coefficient of thermal linear expansion α in the temperature range from 0° to 50° of less than 1.5×10⁻⁶K⁻¹.

9. Length measuring device according to one of the preceding claims, wherein the support (3) consists of aluminium.

10. Length measuring device according to one of the preceding claims, wherein the scale (1) is fastened to the support (3) at points outside the fixing position (F) by means of a bonding agent (5) of high elasticity.

11. Length measuring device according to Claim 10, wherein the bonding agent (5) of high elasticity is a double-sided adhesive tape.

12. Length measuring device according to one of the preceding claims, wherein the mounting element (6) consists of steel.

13. Length measuring device according to one of the preceding claims, wherein the support (3) is a hollow profile, in the interior space of which the scale (1) and a scanning unit (8) for scanning the scale (1) are arranged, the locating pin (7) being arranged in a locating hole (32) in the hollow profile and running to the mounting element (6) arranged outside the hollow profile.

## Revendications

1. Dispositif de mesure de longueur avec une échelle graduée (1) qui s'étend dans une direction longitudinale (X) et qui présente une graduation de mesure (11) pour la mesure de position en direction longitudinale (X), dans lequel l'échelle graduée (1) est fixée rigidement en une position fixe (F) dans la direction de mesure (X) au moyen d'un agent adhésif (4) appliqué sur une face de montage (31) d'un support (3) et est dans la région restante découplée du support (3), de telle manière que l'échelle graduée (1) et le support (3) puissent se déplacer l'un par rapport à l'autre dans la direction longitudinale (X) lors de variations de température, **caractérisé en ce qu'**il est prévu un élément de montage (6), qui est conçu pour être fixé à un objet à mesurer, dans lequel l'élément de montage (6) est assemblé sans jeu au support (3) à la position fixe (F) au moyen d'un goujon d'assemblage (7), par le fait que celui-ci est chassé d'une part dans un alésage d'ajustage (62) de l'élément de montage (6) et d'autre part dans un alésage d'ajustage (32) du support (3) perpendiculairement à la direction de mesure (X), et dans lequel le goujon d'assemblage (7) forme dans le support (3) un assemblage par emboîtement sans jeu sur une première distance (A1), dans lequel cet emboîtement arrive jusqu'à une deuxième distance (A2) à la face de montage (31) du support (3), la deuxième distance (A2) étant plus petite que la première distance (A1).

2. Dispositif de mesure de longueur selon la revendication 1, dans lequel l'axe longitudinal (L) du goujon d'assemblage (7) s'étend perpendiculairement à la face de montage (31) du support (3).

3. Dispositif de mesure de longueur selon l'une quelconque des revendications précédentes, dans lequel l'agent adhésif (4) est appliqué dans la direction de mesure (X) à plat sur la face de montage (31) et l'axe longitudinal (L) du goujon d'assemblage (7) coupe au centre l'agent adhésif (4) appliqué à plat dans la direction de mesure (X).

4. Dispositif de mesure de longueur selon l'une quelconque des revendications précédentes, dans lequel l'agent adhésif (4) est une colle durcissant à la lumière.

5. Dispositif de mesure de longueur selon l'une quelconque des revendications précédentes, dans lequel il est prévu dans l'élément de montage (6), de part et d'autre symétriquement au goujon d'assemblage (7) et à distance l'un de l'autre dans la direction de mesure (X), chaque fois un alésage (63, 64) s'étendant perpendiculairement à la direction de mesure (X) et perpendiculairement à l'axe longitudinal (L) du goujon d'assemblage (7), dans lequel les deux alésages (63, 64) sont conçus pour fixer l'élément de montage (6) à l'objet à mesurer au moyen de vis (67, 68).

6. Dispositif de mesure de longueur selon l'une quelconque des revendications précédentes, dans lequel l'échelle graduée (1) et le support (3) sont constitués de matériaux ayant des coefficients de dilatation thermique linéaire différents.

7. Dispositif de mesure de longueur selon la revendication 6, dans lequel l'échelle graduée (1) est constituée de verre ou de vitrocéramique et le support (3) est constitué d'un métal.

8. Dispositif de mesure de longueur selon l'une quelconque des revendications précédentes, dans lequel l'échelle graduée (1) se compose d'un matériau ayant un coefficient de dilatation thermique linéaire α inférieur à 1,5 x 10⁻⁶K⁻¹ dans la plage de température de 0° à 50°.

9. Dispositif de mesure de longueur selon l'une quelconque des revendications précédentes, dans lequel le support (3) est constitué d'aluminium.

10. Dispositif de mesure de longueur selon l'une quelconque des revendications précédentes, dans lequel l'échelle graduée (1) est fixée au support (3) en des endroits à l'extérieur de la position fixe (F) au moyen d'un adhésif (5) à haute élasticité.

11. Dispositif de mesure de longueur selon la revendication 10, dans lequel l'adhésif (5) à haute élasticité est un ruban adhésif double face.

12. Dispositif de mesure de longueur selon l'une quelconque des revendications précédentes, dans lequel l'élément de montage (6) est constitué d'acier.

13. Dispositif de mesure de longueur selon l'une quelconque des revendications précédentes, dans lequel le support (3) est un profilé creux, dans le volume intérieur duquel sont disposées l'échelle graduée (1) et une unité de lecture (8) pour lire l'échelle graduée (1), dans lequel le goujon d'assemblage (7) est disposé dans un alésage d'ajustage (32) du profilé creux et s'étend jusqu'à l'élément de montage (6) disposé à l'extérieur du profilé creux.
